# NEUE EUROPÄISCHE PATENTSCHRIFT

(11) **EP 0 632 563 B2**
(45) Veröffentlichungstag und Bekanntmachung des Hinweises auf die Entscheidung über den Einspruch: **09.07.2008**
(45) Hinweis auf die Patenterteilung: 02.10.2002
(21) Anmeldenummer: 94110111.5
(22) Anmeldetag: 29.06.1994
(51) Int. Cl.: H02J 13/00, H04B 1/16

(54) **Standby-Schaltung für elektrische Verbraucher**
Standby-circuit for an electrical user
Circuit de veille pour appareil électrique

(30) Priorität: 01.07.1993 DE 4321948
(43) Veröffentlichungstag der Anmeldung: 04.01.1995
(73) Patentinhaber: Micronas GmbH, 79108 Freiburg i. Br. (DE)
(72) Erfinder: Preller, Peter, Dipl.-Ing., D-81243 München (DE)
(74) Vertreter: Patentanwälte Westphal, Mussgnug & Partner

(56) Entgegenhaltungen:
- EP-A- 0 158 251
- EP-A- 0 333 275
- EP-A- 0 358 166
- EP-A- 0 436 515
- EP-B1- 0 354 523
- DE-A- 2 503 568
- DE-A- 3 045 715
- DE-A- 3 234 763
- DE-U- 9 309 814

## Beschreibung

Die Erfindung betrifft eine Standby-Schaltung für elektrische Verbraucher enthaltend eine Dekodereinrichtung, durch die das von der Fernbedienung ausgesandte Signal dekodiert wird, und eine Leistungsversorgung für den Verbraucher, die eingeschaltet wird, wenn durch die Dekodereinrichtung ein Befehl zum Einschalten der Leistungsversorgung festgestellt wird.

Standby-Schaltungen sind Schaltungen für elektrische Verbraucher, die in Betrieb gehalten werden, während die übrigen Funktionseinheiten des Verbrauchers abgeschaltet sind, um von einer Fernbedienung ausgesandte Signale zu empfangen und das Gerät einzuschalten, wenn eine Signalkennung für Einschalten festgestellt wird. Da eine Standby-Schaltung dauernd in Betrieb ist, soll sie derart realisiert sein, daß sie möglichst wenig Verlustleistung verbraucht.

Eine in der DE 32 31 581 C2 beschriebene Standby-Schaltung verwendet zur Leistungsversorgung des Verbrauchers ein Schaltnetzteil. Das Schaltnetzteil enthält im wesentlichen einen Transformator, eine Schalteinrichtung, durch die der Stromfluß durch den Transformator ein- und ausgeschaltet wird, und eine Einrichtung zur Steuerung der Schalteinrichtung. Die Steuerungseinrichtung weist eine Standby-Betriebsart auf, bei der im wesentlichen nur der die Infrarotempfangs- und Dekodiereinrichtung speisende Sekundärwicklungsausgang in Betrieb ist, während die die anderen Schaltungsteile des Geräts speisenden Wicklungsausgänge im Leerlauf betrieben werden. Da die Steuerungseinrichtung und der entsprechende Teil des Transformators während der Standby-Phase ständig eingeschaltet sind, wird eine relativ hohe Verlustleistung verbraucht, die üblicherweise in der Größenordnung von 10 Watt liegt.

In der Patentschrift DE 33 03 114 wird ein Schaltnetzteil beschrieben, bei dem der gesamte Fernbedienempfängervon der Sekundärseite mit Strom versorgt wird. Während der Standby-Betriebsart werden die sekundärseitigen Ausgangsspannungen derart verringert, daß nur der Fernbedienempfänger aktiv bleibt. Die Verlustleistung im Standby-Betrieb beträgt hier etwa 5 Watt.

In der Patentschrift DE 26 20191 ist ein Schaltnetzteil mit Standby-Betriebsart beschrieben, bei dem der gesamte Fernbedienempfänger von einem Flußwandlerausgang des Schaltnetzteils mit Strom versorgt wird.

Bei einer anderen dort gezeigten Ausführungsform ist neben dem den Verbraucher speisenden Schaltnetzteil ein weiterer Transformator vorgesehen, durch den der Fernbedienempfänger gespeist wird. Während der Standby-Betriebsart wird das Schaltnetzteil abgeschaltet. Der zusätzliche Transformator und der 5 Fernbedienempfänger sind dauernd eingeschaltet. Auch bei heutigen Weiterentwicklungen dieses Prinzips liegt die Gesamtverlustleistung im wesentlichen wegen der im Transformator verbrauchten Leistung etwa in der Größenordnung von 1 Watt.

Aus der EP 0 158 251 B2 ist eine Schaltungsanordnung für den Standby-Betrieb eines Fernsehempfängers beschrieben, die ein Schaltnetzteil aufweist. Primärseitig ist an dieses Schaltnetzteil ein Verstärker für Fernbedienungssignale und sekundärseitig ist an dieses Schaltnetzteil eine Auswerteschaltung (Dekoder) angeschlossen. Während der Standby-Phase wird nur der primärseitige Verstärker mit Leistung versorgt, die sekundärseitige Auswerteschaltung ist abgeschaltet. Wird vom Verstärker ein Fernbedienungssignal empfangen, wird das Schaltnetzteil aktiviert, um die Auswerteschaltung einzuschalten. Das verstärkte Fernbedienungssignal wird unter galvanischer Trennung von der Primär- zur Sekundärseite übertragen, was einen Aufwand an diskreten Bauelementen erfordert und wozu der primärseitige Verstärker zudem eine relativ hohe Ausgangsleistung bereitstellen muss.

Die Aufgabe der Erfindung besteht darin, die eingangs angegebene Standby-Betriebsschaltung derart weiterzubilden, daß sie eine möglichst geringe Verlustleistung während des Standby-Betriebs aufweist.

Diese Aufgabe wird durch eine Standby-Schaltung gemäß den Merkmalen des Anspruchs 1 gelöst.

Vorteilhafte Weiterbildungen sind in den Unteransprüchen angegeben.

In der Standby-Betriebsart ist nur der Detektor dauernd eingeschaltet. Der Dekoder ist normalerweise abgeschaltet und wird nur beim Empfang eines Fernbedienungssignals eingeschaltet. Die Schaltung für den Detektor kann hochohmig realisiert werden. Somit ist eine niedrige Dauerleistungsaufnahme bei Standby-Betriebsart gewährleistet.

Der Detektor und der Dekoder sind getrennt auf der Primär- bzw. der Sekundärseite des Transformators angeordnet. Dabei kann der Detektor einerseits aus einem Energiespeicher versorgt werden. Bei Verwendung eines Kondensators als Energiespeicher ist ein Nachladen des Kondensators bei Unterschreiten einer Mindestspannung durch den Anlaufbetrieb des Schaltnetzteils notwendig. Bei Verwendung einer wiederaufladbaren Batterie als Energiespeicher kann die Aufladung bei Inbetriebnahme des Verbrauchers erfolgen. Andererseits kann der Detektor durch Spannungsteilung und Gleichrichtung im Strompfad der primärseitig angeordneten Y-Kondensatoren mit Leistung versorgt werden.

Im folgenden wird die Erfindung anhand der in der Zeichnung dargestellten Figuren näher erläutert. Gleiche Elemente sind dabei mit gleichen Bezugszeichen versehen. Es zeigen:
- FIG 1: ein Prinzipschaltbild einer erfindungsgemä-ßen Standby-Schaltung,
- FIG 2: eine Ausführung mit primärseitiger Anordnung des Detektors und sekundärseitiger Anordnung des Dekoders,
- FIG 3: eine Ausführung mit primärseitiger Anordnung von Detektor und Dekoder,
- FIG 4: eine Ausführung mit sekundärseitiger Anordnung von Detektor und Dekoder,
- FIG 5: die Leistungsversorgung des Detektors bei sekundärseitiger Anordnung entsprechend FIG 4,
- FIG 6: das Prinzipschaltbild eines Detektors und
- FIG 7: eine Ausführung des Detektors im Detail.

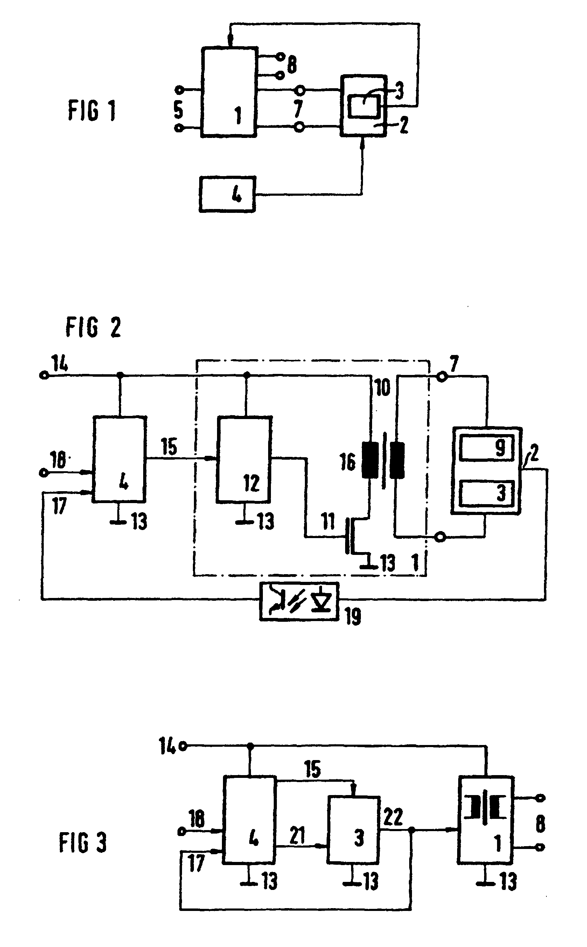

Eine erfindungsgemäße Standby-Schaltung enthält gemäß FIG 1 eine Leistungsversorgungseinrichtung 1, die beispielsweise ein Leistungsumformer, insbesondere ein Schaltnetzteil, sein kann. An einem Eingang 5 wird dem Schaltnetzteil 1 eine durch Gleichrichtung, z. B. durch einen Brückengleichrichter, gewonnene Gleichspannung zugeführt. An mindestens einem Sekundärausgang 8 des Schaltnetzteils 1 steht eine auf einen anderen Spannungspegel umgesetzte Gleichspannung zum Betrieb von Funktionseinheiten des Verbrauchers zur Verfügung. Durch einen Sekundärausgang 7 wird eine Steuereinheit 2 mit Leistung versorgt. Die Steuereinheit 2 enthält mindestens eine Dekodereinrichtung 3, durch die ein von einer Fernbedienung ausgesandtes Signal, üblicherweise ein Infrarotsignal, dekodiert und zu entsprechenden Steuersignalen umgesetzt wird. Das Fernbedienungssignal enthält unter anderem Befehle zum Ein- und Ausschalten des Verbrauchers. In einer Detektoreinrichtung 4 wird der Empfang eines Infrarotsignals festgestellt. Ein im Infrarotsignal gegebenenfalls enthaltener Befehl bleibt dabei unberücksichtigt. Wenn vom Detektor 4 ein Infrarotsignal erkannt wird, wird die Einrichtung 2 eingeschaltet. Dies kann durch entsprechende Schaltungsmaßnahmen zum Einschalten in der Einrichtung 2 selbst ausgeführt werden oder durch Aktivierung des entsprechenden Leistungsversorgungsausgangs 7 des Schaltnetzteils 1. Der eingeschaltete Dekoder 3 der Steuereinrichtung 2 dekodiert dann das von der Fernbedienung ausgesandte Signal. Hierzu ist in der Einrichtung 2 ein weiterer Infrarotempfänger und -vorverstärker vorgesehen, dessen Ausgangssignal in den Dekoder 3 eingespeist wird.

Für die Anordnung des Dekoders 3 und des Detektors 4 bzgl. des Schaltnetzteils 1 und für deren Leistungsversorgung sind verschiedene Ausführungen möglich. Die Einrichtungen 3, 4 können sowohl gemeinsam von der Primärseite als auch von der Sekundärseite des Schaltnetzteils 1 mit Leistung versorgt werden. Außerdem kann der Detektor 4 auf der Primärseite, der Dekoder 3 auf der Sekundärseite des Schaltnetzteils angeordnet werden. Die entsprechenden Ausführungsformen sind in den Figuren 2 bis 5 dargestellt. Signale, die von der Primärseite auf die Sekundärseite des Schaltnetzteils 1 übertragen werden, werden dabei stets galvanisch entkoppelt. Dies kann beispielsweise durch einen Übertrager oder eine Kombination aus Leuchtdiode und Fototransistor bewirkt werden.

In der FIG 2 liegt der Detektor 4 auf der Primärseite des Schaltnetzteils 1, der Dekoder 3 auf der Sekundärseite. Das Schaltnetzteil 1 enthält einen Transformator 10, in dessen Primärwicklung ein Schalttransistor 11 geschaltet ist. Der Schalttransistor 11 zerhackt den Stromfluß durch die Primärwicklung des Transformators 10, wobei er durch eine Einrichtung 12 gesteuert wird. Die Einrichtung 12 ist üblicherweise ein integrierter Schaltkreis. Das Schaltnetzteil 1 wird primärseitig an einem Anschluß 14 von einer gleichgerichteten Netzspannung, die auf Primärmasse 13 bezogen ist, versorgt. Auch der Dekoder 4 wird von der gleichgerichteten Netzspannung am Anschluß 14 versorgt. Ein Ausgang 15 des Dekoders 4 ist mit einem entsprechenden Eingang des Steuerungs-ICs 12 des Schaltnetzteils 1 verbunden, so daß das Schaltnetzteil 1 bei einem aktiven Signal am Anschluß 15 eingeschaltet wird. Dies ist dann der Fall, wenn ein von einer Fernbedienung ausgesandtes Infrarotsignal durch den Detektor 4 erkannt wird. Zweckmäßigerweise wird das Schaltnetzteil 1 in einer Betriebsart betrieben, in der nur die nachfolgend beschriebene Steuerungseinrichtung 2 eingeschaltet ist, während andere Funktionseinheiten des Verbrauchers weiterhin ausgeschaltet sind. Diese Betriebsart des Schaltnetzteils ist aus dem eingangs erwähnten Stand der Technik bekannt.

Die Standby-Schaltung enthält außerdem die Steuerungseinrichtung 2, die von einer Sekundärwicklung 16 des Transformators 10 des Schaltnetzteils 1 versorgt wird. Die Steuerungseinrichtung 2 enthält den Dekoder3 und einen Infrarotvorverstärker 9. Nachdem das Schaltnetzteil 1 bei Vorliegen eines Infrarotsignals eingeschaltet worden ist, wird das Infrarotsignal auch vom Vorverstärker 9 empfangen, der das Signal verstärkt und dem Dekoder 3 zuführt. In Abhängigkeit von den aus dem Infrarotsignal dekodierten Befehl steuert der Dekoder 3 die Standby-Schaltung. Enthält das Infrarotsignal keinen dekodierbaren Befehl, wenn z. B. ein Infrarotsignal von einer nicht zum Verbraucher gehörenden Fernbedienung empfangen wird, wird das Schaltnetzteil 1 wieder abgeschaltet. Wenn ein Befehl zum Einschalten des Verbrauchers dekodiert wird, wird das Schaltnetzteil 1 und die entsprechende Sekundärwicklung 16 eingeschaltet gehalten, so daß die Steuerungseinrichtung 2 weiter aktiv bleibt. Für diese Rückkopplung weist der Detektor 4 einen Rückkopplungseingang 17 auf, mit dem dessen Ausgang 15 im aktiven Zustand gehalten wird. Die Signalübertragung erfolgt dabei über eine galvanische Kopplung 19. Außerdem wird durch die Steuerungseinrichtung 2 das gesamte Schaltnetzteil 1 und somit der angeschlossene Verbraucher eingeschaltet. Beim Dekodieren eines Signals zum Ausschalten des Verbrauchers wird die Standby-Schaltung in den Ausgangszustand gebracht. Um die Standby-Schaltung auch durch Handbetrieb zu aktivieren, ist ein weiterer Anschluß 18 vorgesehen, der beispielsweise mit einem Einschaltkontakt, z. B. einem Wischkontakt, verbunden ist.

Der Detektor 4 bleibt fortlaufend eingeschaltet. Er kann hochohmig realisiert werden, so daß wenig Verlustleistung verbraucht wird. Das eingeschaltete Schaltnetzteil 1 und die Steuerungseinrichtung 2, deren Dekoder 3 üblicherweise ein aufwendiger integrierter Schaltkreis ist, verbrauchen verglichen mit dem Detektor 4 eine relativ hohe Verlustleistung. Sie werden deshalb nur beim Erkennen eines Infrarotsignals eingeschaltet. Somit bleibt die Verlustleistung der Gesamtschaltung im Standby-Betrieb gegenüber herkömmlichen Lösungen relativ gering.

Bei der Ausführungsform nach FIG 3 ist der Dekoder 3 auf der Primärseite des Schaltnetzteils 1 angeordnet. Beim Erkennen eines Infrarotsignals durch den Detektor 4 wird dessen Ausgang 15 aktiv geschaltet. Dadurch wird der Dekoder 3 eingeschaltet. Dies kann beispielsweise dadurch erreicht werden, daß der Dekoder 3 durch den Anschluß 15 mit Spannung versorgt wird. Dem Dekoder 3 wird außerdem über einen Ausgang 21 des Detektors 4 das empfangene und verstärkte Infrarotsignal 21 zugeführt. Wenn ein Signal zum Einschalten des Verbrauchers durch den Dekoder 3 erkannt wird, wird über dessen Ausgang 22 das Schaltnetzteil 1 und somit der Verbraucher eingeschaltet. Der Ausgang 22 ist entsprechend auf den Eingang 17 des Detektors 4 rückgekoppelt, um den Dekoder 3 zum Dekodieren eines Ausschaltbefehls eingeschaltet zu halten. Zweckmäßigerweise werden vom Dekoder 3 nur Ein- und Ausschaltsignale erkannt. Somit kann der Dekoder 3 mit geringem Schaltungsaufwand und somit geringem Stromverbrauch realisiert werden. Dadurch ist dessen Versorgung über den Ausgang 15 des Detektors 4 ohne weiteres möglich. Das Dekodieren weiterer Steuerungsfunktionen wird von einem weiteren Dekoder ausgeführt, der von der Sekundärseite des Schalternetzteils 1 versorgt wird und erst mit dem Einschalten des Verbrauchers aktiviert wird.

Durch die Anordnung des Dekoders 3 auf der Primärseite wird erreicht, daß das Schaltnetzteil 1 nur dann eingeschaltet wird, wenn ein Infrarotsignal zum Einschalten von der zum Verbraucher gehörenden Fernbedienung empfangen wird. Alle anderen Infrarotsignale bleiben ohne Wirkung auf das Schaltnetzteil 1. Somit benötigt der im Schaltnetzteil 1 enthaltene Steuerungsschaltkreis im Vergleich zur Ausführungsform gemäß FIG 1 keine extra Betriebsart zur Speisung des sekundärseitigen Infrarotempfängers und -dekoders. Vorteilhafterweise kann das am Ausgang 21 des Detektors 4 anliegende verstärkte Infrarotsignal ohne wesentlichen Schaltungsaufwand an einem internen Schaltungsknoten des Detektors 4 abgegriffen werden.

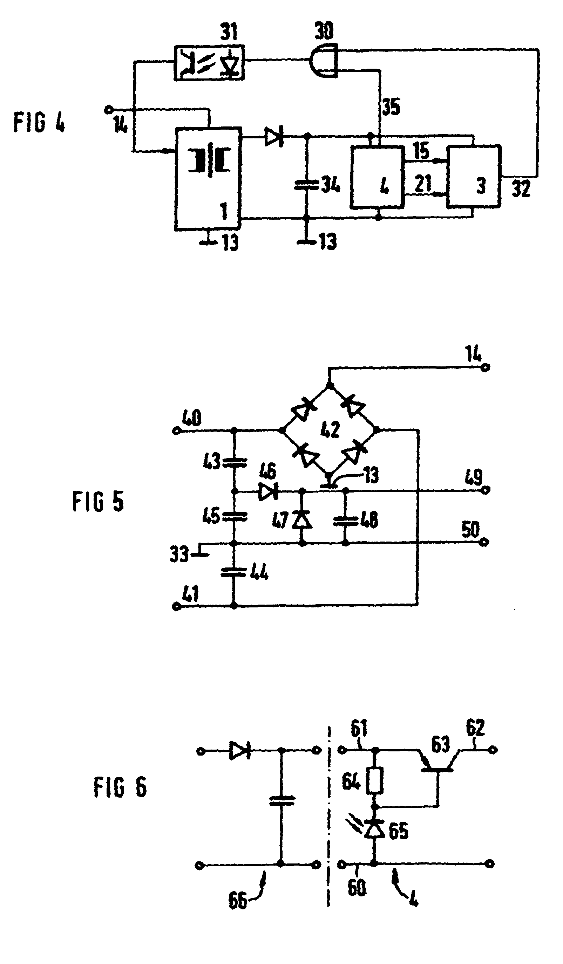

In der FIG 4 ist eine Ausführungsform gezeigt, bei der sowohl der Detektor 4 als auch der Dekoder 3 auf der Sekundärseite des Schaltnetzteils 1 angeordnet sind. Der Detektor 4 wird zur Spannungsversorgung während der Standby-Phase aus einem Energiespeicher versorgt. Im vorliegenden Fall ist der Energiespeicher ein Kondensator 34, der von der Sekundärseite des Schaltnetzteils 1 aufgeladen wird. Der Dekoder 3 ist dabei abgeschaltet, so daß er keinen Strom verbraucht. Durch den Strombedarf des Detektors 4 wird der Kondensator 34 entladen. Beim Unterschreiten einer Mindestspannung wird ein Signal an einem Ausgang 35 des Detektors 4 aktiv geschaltet, welches über einen Optokoppler 31 auf die Primärseite des Schaltnetzteils 1 gekoppelt wird und das Schaltnetzteil 1 so lange einschaltet, bis der Kondensator 34 wieder auf seine volle Spannung aufgeladen ist. Hierzu reicht im allgemeinen der Anlaufbetrieb des Schaltnetzteils 1 aus. Das am Ausgang 35 des Detektors 4 anliegende Signal kann ohne wesentlichen Schaltungsaufwand an einem internen Schaltungsknoten des Detektors 4 abgegriffen werden.

Wenn der Dekoder 3 ein in komplementärer MOS-Technik hergestellter Schaltkreis ist, wird das Abschalten des Dekoders 3 zweckmäßigerweise dadurch bewirkt, daß über den Anschluß 15 der Takt des Schaltkreises 3 abgeschaltet wird. Der Dekoder 3 wird eingeschaltet, wenn vom Detektor 4 ein Infrarotsignal erkannt wird. Dieses wird dem Dekoder 3 über den Ausgang 21 des Detektors 4 verstärkt zugeführt. Der Dekoder 3 schaltet beim Feststellen eines Signals zum Einschalten des Verbrauchers den Ausgang 32 aktiv, der außerdem auf die Primärseite des Schaltnetzteils 1 rückgekoppelt wird. Dabei werden die Ausgänge 32, 35 des Dekoders 3 bzw. Detektors 4 im Schaltglied 30 ODERverknüpft.

Im Vergleich zu herkömmlichen Standby-Schaltungen ist während der Standby-Phase nur der Detektor 4, nicht aber der Dekoder 3 eingeschaltet. Das Schaltnetzteil 1 wird nur zur Aufladung des Kondensators 34 in Anlaufbetriebsart kurz eingeschaltet. Dadurch ist die Verlustleistung niedrig. Außerdem ist für das Schaltnetzteil 1 keine Standby-Betriebsarteinstellung erforderlich.

Alternativ zu dem in der FIG 4 als Energiespeicher gezeigten Kondensator 34 kann auch eine wiederaufladbare Batterie verwendet werden. Dabei wird davon ausgegangen, daß die Batteriekapazität ausreicht, den Detektor 4 solange mit Strom zu versorgen, bis das Gerät eingeschaltet wird. Erst dann wird die Batterie wieder aufgeladen.

Anstelle der sekundärseitigen Versorgung der sekundärseitig angeordneten Detektor- und/oder Dekodereinrichtungen 4 bzw. 3 kann auch eine primärseitige Versorgung vorgesehen werden. Die entsprechende Ausführung dieser Stromversorgung ist in FIG 5 gezeigt. Die an Anschlüssen 40, 41 anliegende Netzwechselspannung wird in einer Brückengleichrichterschaltung 42 gleichgerichtet und liegt am Anschluß 14 bezüglich Primärmasse 13 vor. Üblicherweise sind zur Entstörung zwischen den Anschlüssen 40, 41 zwei in Reihe geschaltete Kondensatoren 43, 44 vorgesehen, deren Verbindungspunkt mit Sekundärmasse, also dem Masseanschluß 33 verbunden ist. Die Kondensatoren 43, 44 werden für gewöhnlich als Y-Kondensatoren bezeichnet. Erfindungsgemäß ist zwischen dem Kondensator 43 und dem Sekundärmasseanschluß 33 zur Spannungsteilung der Wechselschaltung ein Kondensator 45 geschaltet. Die am Kondensator 45 anliegende Wechselspannung wird über ein Gleichrichternetzwerk aus Dioden 46, 47 und einem Kondensator 48 gleichgerichtet und geglättet. Die Spannung am Kondensator 48 liegt somit bezüglich der Sekundärmasse 33 vor. An die Anschlußklemmen 49, 50 des Kondensators 48 wird der sekundärseitig arbeitende Detektor 4 zur Stromversorgung angeschlossen.

Die in der FIG 5 dargestellte Stromversorgung für den Detektor 4 ist mit wenig schaltungstechnischem Aufwand realisierbar. Da der Detektor 4 einen geringen Stromverbrauch hat und bei entsprechender Dimensionierung mit niedriger Versorgungsspannung gespeist werden kann, ist die Anforderung hinsichtlich der Spannungsfestigkeit an den Kondensator 45 vergleichsweise gering.

Zweckmäßigerweise wird für die Detektorschaltung 4 bei Verwendung einer Infrarotfernbedienung einer der nachfolgend beschriebenen Infrarotdetektoren verwendet. In der FIG 6 ist das Prinzipschaltbild des Infrarotdetektors gezeigt. Der Infrarotdetektor 4 weist einen Anschluß 60 für ein Bezugspotential und einen Versorgungsanschluß 61 auf. Zwischen dem Anschluß 61 und einem Ausgangsanschluß 62 liegt die Emitter-Kollektor-Strecke eines pnp-Bipolartransistors 63. Basis und Emitter des Transistors 63 sind übereinen Widerstand 64 verbunden. Die Basis des Transistors 63 ist über eine für Infrarotlicht empfindliche Diode 65 mit dem Bezugsanschluß 60 verbunden. Die Diode 65 liefert für steigende Beleuchtungsstärke einen ansteigenden Sperrstrom. Das Eingangsklemmenpaar 60, 61 wird an eine Versorgungsgleichspannung angeschlossen. Zum Anschluß an eine Wechselspannung kann eine Dioden-Kondensator-Gleichrichterschaltung 66 verwendet werden.

Wenn auf die Fotodiode 65 Licht von einer für sie charakteristischen Wellenlänge auftrifft, steigt deren Sperrstrom, so daß durch den Widerstand 64 ein Querstrom zwischen den Anschlußklemmen 60, 61 fließt. Durch die nun an der Basis-Emitter-Strecke abfallende Spannung wird der Transistor 63 eingeschaltet. Die Eingangsspannung zwischen den Klemmen 60, 61 liegt nun an den Klemmen 60, 62 an. Der Ausgang 62 ist damit aktiv geschaltet.

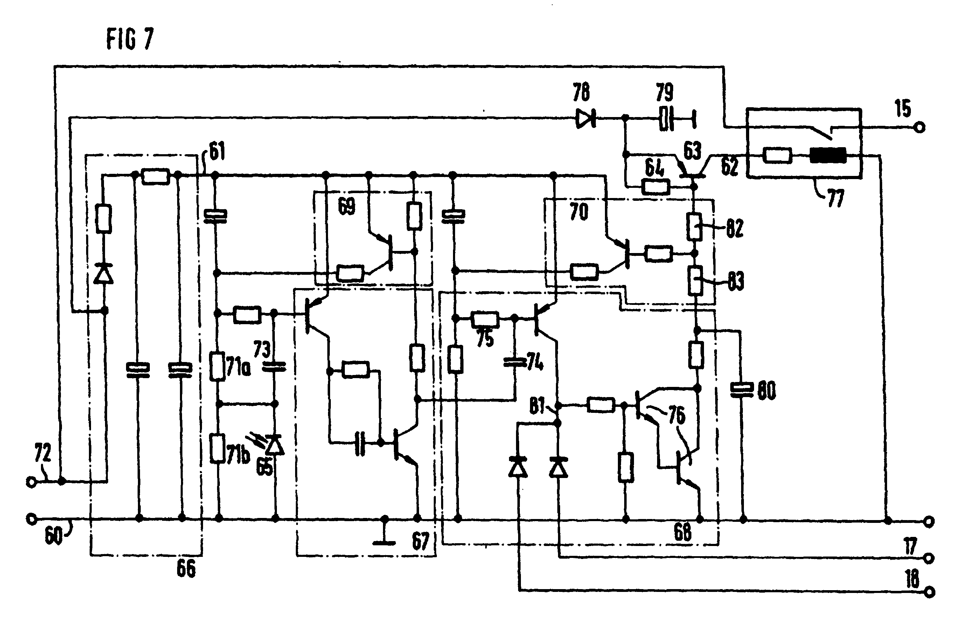

Ein detailliertes Schaltbild eines Detektors, der eine hohe Verstärkung und Hochpaßcharakter aufweist und deshalb besonders für übliche Infrarotsignale einer Fernbedienung geeignet ist, ist in FIG 7 gezeigt. Der Detektor enthält eingangsseitig ein Gleichrichtungs- und Glättungsglied 66. Die eingangsseitigen Anschlußklemmen 60, 72 können sowohl an eine Wechselspannung als auch an eine Gleichspannung angeschlossen werden. Die Fotodiode 65 ist mit dem Mittelanschluß eines Spannungsteilers 71 a, 71 b verbunden. Dadurch ist die Fotodiode 65 vor hohen Sperrspannungen geschützt. An die Katode der Fotodiode 65 ist ein Kondensator 73 angeschlossen. Der Kondensator 73 wirkt als Hochpaß, so daß nur sich schnell ändernde Helligkeitssignale, wie sie üblicherweise von Infrarotsendern ausgestrahlt werden, verarbeitet werden. Die Schaltung bleibt somit gegenüber Helligkeitsschwankungen des Tageslichts oder dem mit niedriger Frequenz modulierten Licht von Glühlampen unempfindlich. Dem Kondensator 73 ist ausgangsseitig eine erste Verstärkerstufe 67 nachgeschaltet, der wiederum eine zweite Verstärkerstufe 68 folgt. Die Verstärkerstufe 68 enthält ausgangsseitig eine Darlington-Schaltung 76, die für eine hohe Verstärkung sorgt. Durch einen Kondensator 74 in Zusammenwirkung mit einem Widerstand 75 weist die Verstärkerschaltung 68 Hochpaßcharakter auf. Durch die Gesamtverstärkung der hintereinander geschalteten Verstärker 67, 68 hat der Detektor eine auch für schwach ankommende Infrarotsignale ausreichende hohe Verstärkung. Die Schaltungen 69, 70 sorgen für selbständige Einstellung und Stabilisierung des Arbeitspunktes, so daß ein Abgleich der Schaltung nicht notwendig ist. Der Ausgang des Verstärkers 68 schaltet den pnp-Bipolartransistor 63. Der Kollektoranschluß 62 steuert die Erregerwicklung eines Relais 77. Dadurch weist der Ausgang 15 des Detektors genügend Stromtreiberfähigkeit auf. Um den Emitter-Kollektor-Strompfad des Transistors 63 von dem restlichen Teil des Detektors zu trennen, wird dessen Emitter über einen Dioden-Kondensatorgleichrichter78, 79 unabhängig mit Strom versorgt. Durch den ausgangsseitig an die Verstärkerstufe 68 angeschlossenen Kondensator 80, der zusammen mit den Widerständen 64, 82, 83 des als Integrierglied wirkt, kann für die Schaltfunktion des Detektors eine geeignet zu wählende Trägheit erreicht werden, so daß bei kurzem, möglicherweise gestörtem Empfangssignal der Transistor 63 nicht geschaltet wird. Der Signaleingang 17 für einen Einschaltkontakt und der Signaleingang 18 für die Rückkopplung greifen am Schaltungsknoten 81 an, der mit der Basis der Darlington-Schaltung 76 verbunden ist. Am Knoten 81 kann ein weiterer, nicht dargestellter Eingang eingekoppelt werden, der mit einer Schaltuhr verbunden ist. Diese Schaltuhr dient bei zeitgesteuerten Geräten dazu, den Detektor und eine vom Detektor gesteuerte Steuerungseinrichtung kurzzeitig einzuschalten, durch die dann festgestellt wird, ob eine Zeitbedingung zum Einschalten des Geräts vorliegt.

Der Detektor gemäß FIG 7 kann sowohl mit Gleich- als auch mit Wechselspannung betrieben werden. Bei einem Betrieb auf der Primärseite des Schaltnetzteils empfiehlt sich eine Versorgung mit einer Spannung in der Höhe der Netzspannung. Für sekundärseitigen Betrieb ist eine Versorgungsspannung vorteilhaft, die auch für den Betrieb von digitalen integrierten Schaltungen (z. B. 5 V) geeignet ist. Die gezeigte Schaltung kann also bei geeigneter Dimensionierung der verwendeten Bauelemente für verschiedene Versorgungsspannungshöhen verwendetwerden. Die Leistungsaufnahme liegt dabei im Milliwattbereich. Die Schaltung kann ohne weiteres als integrierte Schaltung realisiert werden. Sie kann als Infrarotverstärker und -detektor auch für andere, nicht im Zusammenhang mit Standby-Schaltungen stehende Anwendungen eingesetzt werden.

## Patentansprüche

1. Standby-Schaltung für elektrische Verbraucher enthaltend eine Detektoreinrichtung (4), durch die ein von einer Fernbedienung ausgesandtes Signal empfangbar ist, eine Dekodereinrichtung (3), durch die das von der Fernbedienung ausgesandte Signal dekodiert wird und die während einerStandby-Phase abgeschaltet ist und eingeschaltet wird, wenn von der Detektoreinrichtung (4) ein empfangenes Signal festgestellt wird, und eine Leistungsversorgung für den Verbraucher, die eingeschaltet wird, wenn durch die Dekodereinrichtung (3) ein Befehl zum Einschalten der Leistungsversorgung festgestellt wird, mit einem Leistungsumsetzer (1), von dessen Primärseite die Detektoreinrichtung (4) und von dessen Sekundärseite die Dekodereinrichtung (3) versorgt werden und der beim Feststellen des empfangenen Signals durch die Detektoreinrichtung (4) in einen Zustand geschaltet wird bei dem die Dekodereinrichtung (3) mit Leistung versorgt wird,
**dadurch gekennzeichnet, daß**
eine weitere Detektoreinrichtung (9) durch die ein von der Fernbedienung ausgesandtes Signal empfangbar ist, von der Sekundärseite des Leistungsumsetzers (1) versorgt wird und daß ein Ausgangssignal der weiteren Detektoreinrichtung (9) der Dekodereinrichtung (3) zur Dekodierung zugeführt wird.

2. Standby-Schaltung nach Anspruch 1,
**dadurch gekennzeichnet,**
**daß** die Detektoreinrichtung (4) enthält:
- einen Bipolartransistor (63), dessen Emitter-Kollektor-Strecker zwischen einen Eingangsanschluß (61) und einen Ausgangsanschluß (62) geschaltet ist,
- ein zwischen Emitter und Basis des Bipolartransistors (63) geschaltetes Widerstandselements (64) und
- ein lichtempfindliches Schaltelement (65), das einen ersten Anschluß für ein Bezugspotential aufweist und einen zweiten Anschluß der mit der Basis des Bipolartransistors (63) gekoppelt ist.

3. Standby-Schaltung nach Anspruch 2,
**dadurch gekennzeichnet,**
**daß** die Detektoreinrichtung (4) mindestens eine Signalverstärkereinrichtung (67, 68) mit Hochpaßeigenschaft enthält deren Eingangs-Ausgangs-Signalpfad zwischen den zweiten Anschluß des lichtempfindlichen Schaltelements (65) und die Basis des Bipolartransistors (63) geschaltet ist.

4. Standby-Schaltung nach Anspruch 3,
**dadurch gekennzeichnet,**
**daß** ein Integrierglied (82, 83, 80) zwischen die Basis des Bipolartransistors (63) und den Anschluß für das Bezugspotential (60) geschaltet ist.

5. Standby-Schaltung nach Anspruch 1,
**dadurch gekennzeichnet,**
**daß** der Leistungsumsetzer (1) ein Schaltnetzteil ist, der eine Steuerungseinrichtung (12) zur Steuerung der Betriebszustände des Schaltnetzteils und einen Transformator (10) enthält.

## Claims

1. A standby circuit for electrical consumers containing a detector device (4), by which a signal emitted by a remote control can be received, a decoding device (3), by which the signal emitted by the remote control is decoded and which is switched off during a standby phase and switched on when a received signal is ascertained by the detector device (4), and a power supply for the consumer which is switched on when a command for switching on the power supply is ascertained by the decoder device (3), having a power converter (1), from the primary side of which the detector device (4) is supplied and from the secondary side of which the decoder device (3) is supplied and which is switched into a state in which the decoder device (3) is supplied with power when the received signal is ascertained by the detector device (4),
**characterised in that**
a further detector device (9), by which a signal emitted by the remote control can be received, is supplied from the secondary side of the power converter (1) and **in that** an output signal of the further detector device (9) is supplied to the decoder device (3) for decoding.

2. A standby circuit according to claim 1,
**characterised in that** the detector device (4) contains:
- a bipolar transistor (63), the emitter-collector section of which is switched between an input connection (61) and an output connection (62),
- a resistance element (64) switched between emitter and base of the bipolar transistor (63) and
- a light-sensitive switching element (65), which comprises a first connection for a reference potential and a second connection, which is coupled to the base of the bipolar transistor (63).

3. A standby circuit according to Claim 2,
**characterised in that** the detector device (4) contains at least one signal amplifying device (67, 68) having a high pass property, the input-output signal path of which is switched between the second connection of the light-sensitive switching element (65) and the base of the bipolar transistor (63).

4. A standby circuit according to Claim 3,
**characterised in that** an integrating circuit (82, 83, 80) is switched between the base of the bipolar transistor (63) and the connection for the reference potential (60).

5. A standby circuit according to claim 1,
**characterised in that** the power converter (1) is a switched mode power supply which contains a control device (12) for controlling the operational states of the switched mode power supply and a transformer (10).

## Revendications

1. Circuit de veille pour appareil électrique contenant une installation de détection (4) par laquelle un signal envoyé par une télécommande peut être reçu, une installation de décodage (3) par laquelle le signal envoyé par la télécommande est décodé et qui est déconnectée au cours d'une phase de veille et connectée lorsqu'un signal reçu est reconnu par l'installation de détection (4) et une alimentation de puissance pour l'appareil électrique, laquelle est connectée lorsqu'un ordre destiné à connecter l'alimentation de puissance est reconnu par l'installation de décodage (3), avec un convertisseur de puissance (1) alimentant du côté primaire l'installation de détection (4) et du côté secondaire l'installation de décodage (3), et qui lors de la reconnaissance par l'installation de détection (4) du signal reçu est mis dans un état pour lequel l'installation de décodage (3) est alimentée en puissance,
**caractérisé en ce qu'**
une autre installation de détection (9), par laquelle on peut recevoir un signal envoyé par la télécommande, est alimentée par le côté secondaire du convertisseur de puissance (1), et un signal de sortie de l'autre installation de détection (9) est amené à l'installation de décodage (3) à des fins de décodage.

2. Circuit de veille selon la revendication 1,
**caractérisé en ce que**
l'installation de détection (4) contient
• un transistor bipolaire (63) dont le trajet émetteur-collecteur est connecté entre un raccordement d'entrée (61) et un raccordement de sortie (62),
• un élément de résistance (64) connecté entre l'émetteur et la base du transistor bipolaire (63) et
• un élément de connexion (65) sensible à la lumière qui présente un premier raccordement pour un potentiel de référence et un deuxième raccordement qui est couplé avec la base du transistor bipolaire (63).

3. Circuit de veille selon la revendication 2,
**caractérisé en ce que**
l'installation de détection (4) contient au moins une installation d'amplification de signal (67, 68) avec des propriétés passe-haut dont le trajet de signal d'entrée et de sortie est branché entre le deuxième élément de connexion (65) sensible à la lumière et la base du transistor bipolaire (63).

4. Circuit de veille selon la revendication 3,
**caractérisé en ce que**
le circuit intégré (82, 83, 80) est branché entre la base du transistor bipolaire (63) et le raccordement pour le potentiel de référence (60).

5. Circuit de veille selon la revendication 1,
**caractérisé en ce que**
le convertisseur de puissance (1) est une partie de réseau de distribution qui contient une installation de commande (12) pour commander l'état de fonctionnement de la partie de réseau de distribution et un transformateur (10).
